# EUROPEAN PATENT SPECIFICATION

(11) **EP 1 589 728 B1**
(45) Date of publication and mention of the grant of the patent: **26.12.2007**
(21) Application number: 04009487.2
(22) Date of filing: 22.04.2004
(51) Int. Cl.: H04M 1/02

(54) **A transformable communication device**
Eine transformierbare Kommunikationsvorrichtung
Un dispositif transformable de communication

(43) Date of publication of application: 26.10.2005
(73) Proprietor: Sony Ericsson Mobile Communications AB, 221 88 Lund (SE)
(72) Inventor: Nordenskjöld, Kjell, 114 55 Stockholm (SE)
(74) Representative: Andersson, Björn E.

(56) References cited:
- EP-A- 1 175 070
- EP-A- 1 178 647
- EP-A- 1 307 031
- US-A1- 2002 111 186

## Description

### TECHNICAL FIELD OF THE INVENTION

The invention relates to a transformable communication device, having a transformation arrangement enabling a rotatable arranged interface unit including two displays, each display being arranged on opposite sides of the interface unit, to transform the communication device to different setups, each setup suitable for different applications.

### DESCRIPTION OF RELATED ART

Developments of mobile communication have brought forth a number of different types of mobile phones, such as stick phones, twisted clam-shell phones, flip phones, jack-knife phones, communicators etc. Each type of mobile phone is often directed to a specific use, e.g. a twisted clam-shell phone is a good camera phone; a communicator is good for writing e-mails. There is, however, no mobile phone obtainable that is optimized for the complete range of uses like normal phone usage, writing e-mails, PDA usage, camera usage etc.

The major problem in this respect is that present mobile phones suffer from a limited user interface including a keypad and a display or a limited adaptability to different user interfaces required by different applications. A particular problem with these interfaces is that different applications, like gaming, camera usage, phoning, e-mail/SMS writing, PDA usage etc. require different setups of the display and the keyboard. The most appropriate for phoning is a normal setup including a display, a keypad with the 0-9, * and # keys, and a couple of function keys, where the keys are not too small. When writing an e-mail or an SMS a full qwerty-keyboard is preferable, with a rather wide display. For PDA usage a large touch screen without any conventional keys is the best solution. A couple of prior art mobile phones, described below, have partly solved the problem, but none of them provides a completely transformable phone adaptable to any of the applications provided by a mobile phone.

WO-A1-03/019911 discloses a mobile telephone having a rotation display screen. The mobile telephone comprises a main body and a display screen, in which the display screen is connected to the main body through a junction device, and the junction device serves as the center of a circle. The plane of projection of the display screen could parallelly rotate with respect to the main body. This phone provides the possibility to tilt the display, so that a wider but lower display and a higher but narrower display can be provided, respectively.

GB-A-2 387 063 discloses a foldable mobile phone with an upper unit having a display unit, a lower unit having operation keys, and a biaxial hinge connecting the units. The biaxial hinge allows the upper unit to be opened and closed about a first rotation axis and rotated relative to the lower unit about a second rotation axis. This means that the display unit can be rotated to be directed either towards the user or away from the user. Since the display unit could include a touch panel, the phone may provide a phoning setup, a camera setup and a PDA setup, but lacks a writing setup due to the limited keyboard.

WO-A1-03/075475 discloses a foldable mobile phone with an upper unit having a display unit, a lower unit having operation keys, and a biaxial hinge connecting the units. A rotatable phone cover enables a user to play a game or watch a motion picture using the mobile phone while looking at the display on the phone cover. Even this mobile phone lacks a writing setup.

EP-A2-1 178 647 discloses a folding portable cellular phone including a first box member and a second box member. The first box member includes: an upper case having a window for a display unit; an upper substrate on which electric parts are mounted; an upper hinge frame; and an upper cover on which these components are mounted. The second box member includes: a lower cover in which key holes are formed to provide a key console unit; a lower substrate including a PCB on which electric parts are mounted; a lower hinge frame; and a lower case on which these components are mounted.

### SUMMARY

An object of the present invention is to provide an arrangement for communication devices to be adaptable to requirements of different applications included in the communication device.

This object is achieved by a transformation arrangement for a communication device alternatively adaptable to a phoning setup, a writing setup and a PDA setup. The transformation arrangement for connecting a interface unit and a casing in a communication device comprise a hinge mechanism including a holding part rotatably connecting the interface unit and casing by the holding part that includes two elongated parts being rotatably attached in one end to the interface unit and in another end to the casing.

Preferably the hinge mechanism are arranged in a recess of the casing, and connected in the end of the elongated parts to holes arranged on walls of the recess. Furthermore, the interface unit is provided with a recess on two sides of the interface unit and the elongated parts are connected to the interface unit in one end of the recess.

The recess arranged in the casing is further provided with holding devices interacting with corresponding holding devices on the arms elongated parts to hold the elongated parts in different positions.

In a preferred embodiment the holding part is a shaft arranged in a through hole of the interface unit and the elongated parts are arms attached to the shaft at each end of the shaft.

According to another aspect of the invention the object is achieved by a communication device with a rotatably arranged interface unit, where the interface unit comprises two displays, and wherein the communication device is provided with a transformation arrangement.

In a preferred embodiment, the interface unit and the transformation arrangement are arranged in a recess of the communication device. Furthermore, the interface unit and the transformation arrangement are arranged to enable rotation of the interface unit between a first and a second end position, and where the interface unit and transformation arrangement in each end position are arranged within the recess.

Moreover, the interface unit and the transformation arrangement are arranged to have at least a third position, where the interface unit are positioned between the first and the second end position with the second display available for a user, where a keyboard arranged on a surface of the recess of the communication device is uncovered by the rotation of the interface unit from a first end position. The communication device is further provided with a processor for identifying the present position of the interface unit in relation to the casing and for arranging and/or orientating data displayed on the displays in respect of the relative position of the interface unit.

It should be emphasized that the term "comprises/comprising" when used in this specification is used to specify the presence of stated features, integers, steps or components but does not preclude the presence or addition of one or more other features, integers, steps, components or groups thereof.

### BRIEF DESCRIPTION OF THE DRAWINGS

The invention will be explained more in detail below, by way of example, in connection with preferred embodiments and with reference to the drawings, in which:
Fig. 1 shows a mobile telephone in the stick phone setup having transformation means according to the invention;
Fig. 2 schematically shows the essential parts of a mobile telephone;
Fig. 3 shows a perspective view of a part of the transformation means according to the invention;
Fig. 4 shows a mobile telephone in the communicator phone setup having transformation means according to the invention;
Fig. 5 shows a mobile telephone in a transformation phase having transformation means according to the invention;
Fig. 6 shows a mobile telephone in the PDA phone setup having transformation means according to the invention; and
Fig. 7 shows the rear side of the mobile telephone in any of Figs. 1-4 according to the invention.

### DETAILED DESCRIPTION OF EMBODIMENTS

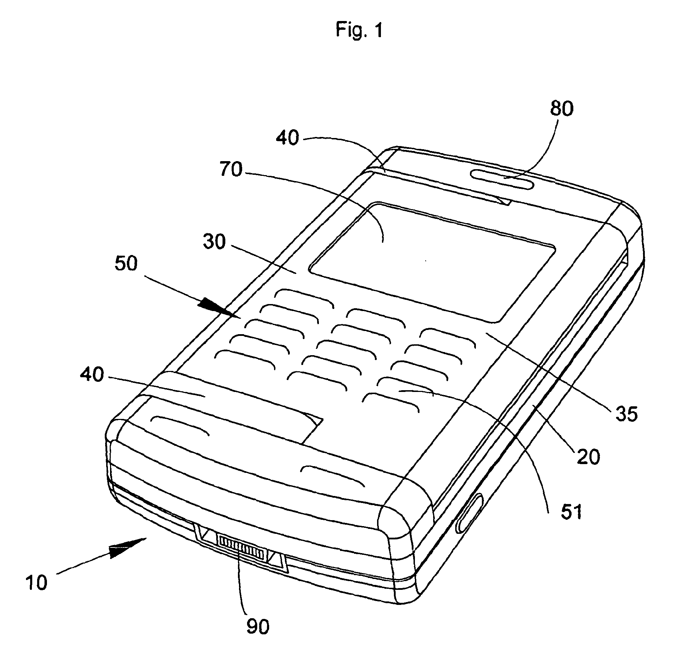

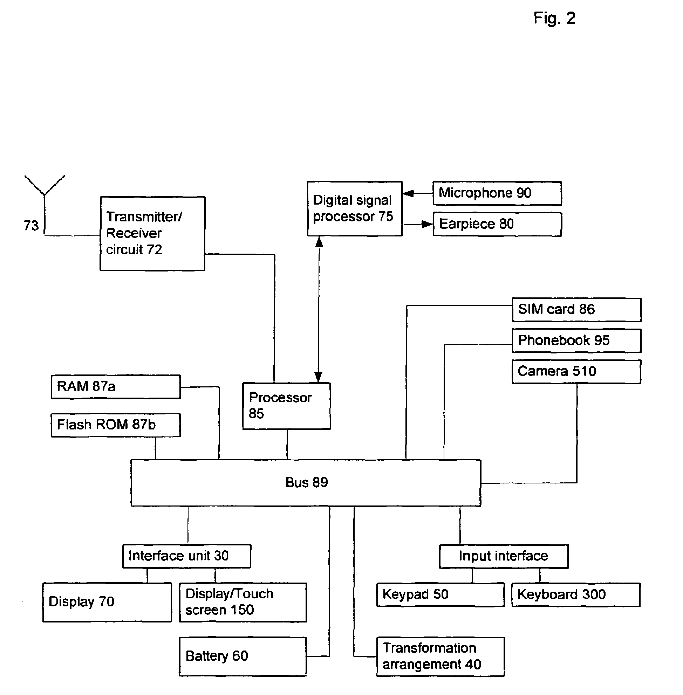

A communication device - transformable between different setups - according to the invention will be described with reference to a portable phone. A preferred embodiment of the phone is shown as a cellular/mobile phone 10 in Fig. 1 arranged in a phoning setup. The mobile phone 10 is provided with a casing 20, a keypad and interface unit 30, including a keypad 50 and a display/LCD 70, rotatably arranged on a transformation arrangement 40. The mobile phone 10 has a user interface including the keypad 50, a battery 60 (see Fig. 2), the display/LCD 70, an earpiece 80 and a microphone 90.

The display 70 and the keypad 50 are arranged on a first side 35 of the interface unit 30. The keypad 50 comprises a set of keys 51 arranged in a number of rows. The keys 51 include alphanumeric keys ("0-9", "#", and "*"), by means of which the user can enter telephone numbers, text messages (SMS), phonebook records, etc. In alpha mode each key is associated with a number of letters and special signs used in text editing. Additionally, the keypad 50 comprises function keys, which are used for selection/navigation in the user interface. The functionality of a function key changes depending on the current menu and the present functionality is shown in a separate field on the display 70.

It is clearly shown in Fig. 1 that the interface unit 30, the transformation arrangement 40 and the casing 20 together form a substantially flat front side of the mobile phone 10 in this phoning setup.

Fig. 2 schematically shows the essential parts of a mobile phone. The microphone 90 records the user's speech, and the analogue signals formed thereby are A/D converted in an A/D converter (not shown) before the speech is encoded in a digital signal processor 75. The encoded speech signal is transferred to a processor 85 (physical layer processor), which e. g. supports terminal software. The processor 85 also forms the interface to the peripheral terminals of the apparatus, including RAM and ROM memories 87a and 87b, an SIM card 86, the displays 70, 150 and the text input units 50, 300 as well as data, power supply, etc.

The processor 85 controls the communication with the network via the transmitter/receiver circuit 72 and an internal or external antenna unit 73. The antenna unit 73 may include separate antenna parts for communication over different communication networks. The digital signal processor 75 speech- decodes the signal, which is transferred from the processor 85 to the speaker 80 via a D/A converter (not shown). The processor 85 is connected via a bus 89 to a RAM memory 87a and a Flash ROM memory 87b, an SIM card 86, interface unit 30, the displays 70, 150 and the text input units 50, 300 (as well as data, power supply, etc.). Furthermore a phonebook 95 is connected to the processor 85 via the bus 89. The phonebook 95 may be stored on the SIM card 86, and/or in the Flash ROM memory 87a.

The telephone 10 is adapted to enable communication via a wireless telecommunications network according to any communication technique, e.g. a TDMA (Time Division Multiple Access), a FDMA (Frequency Division Multiple Access), or a CDMA (Code Division Multiple Access). Also, the communication interface may be adapted for communication over a short range supplementary frequency, such as a WLAN (Wireless Local Area Network), e.g. a Bleutooth^{®} frequency. The communication interface may also comprise means, e.g. an accessory connector, for connecting the mobile phone 10 to the external device by means of a wire, such as a series cable.

Other wireless or wire based communication interfaces are also possible, such as an IR (Infrared) connection. However, the telephone 10 could also be designed for a cordless network, such as DECT.

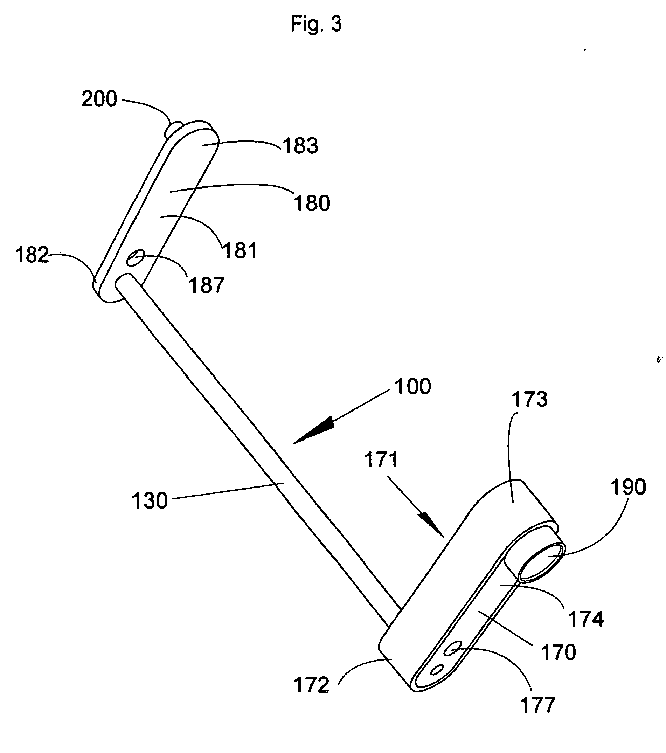

In Fig. 3 a hinge mechanism 100 that is a part of the transformation arrangement 40 is shown including a shaft 130, two arms 170, 180 and two pins 190, 200. The shaft 130 extends between the arms 170, 180 and is attached to the arms 170, 180 on first sides 171, 181 of the arms 170, 180 in first ends 172, 182 of the arms 170, 180 respectively. The arms 170, 180 having a substantially elongated elliptic shape extend substantially perpendicular to the longitudinal direction of the shaft 130.

In the other ends 173, 183 of arms 170, 180 are arranged on second sides 174, 184 pins 190, 200 projecting perpendicular to the longitudinal direction of the arms 170, 180 and substantially parallel with the longitudinal direction of the shaft 130. The pins 190, 200, which have a substantially circular shape projects into holes (not shown) on the casing 20 and are attached by connecting means.

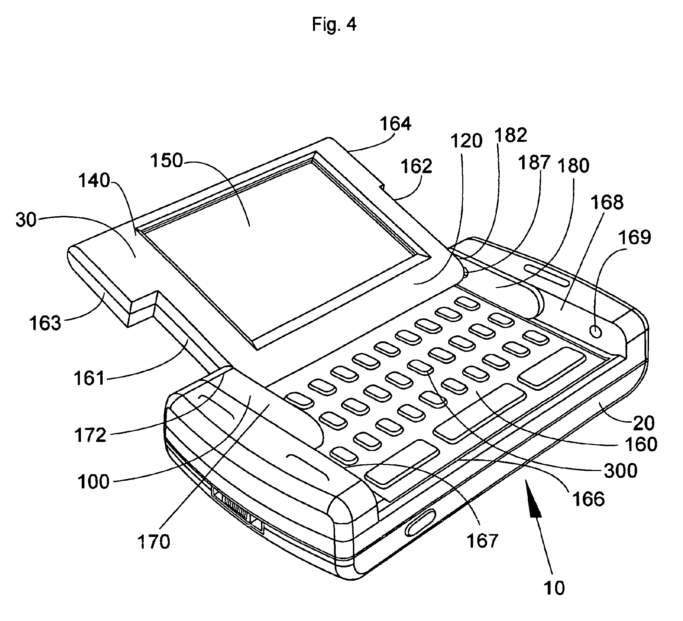

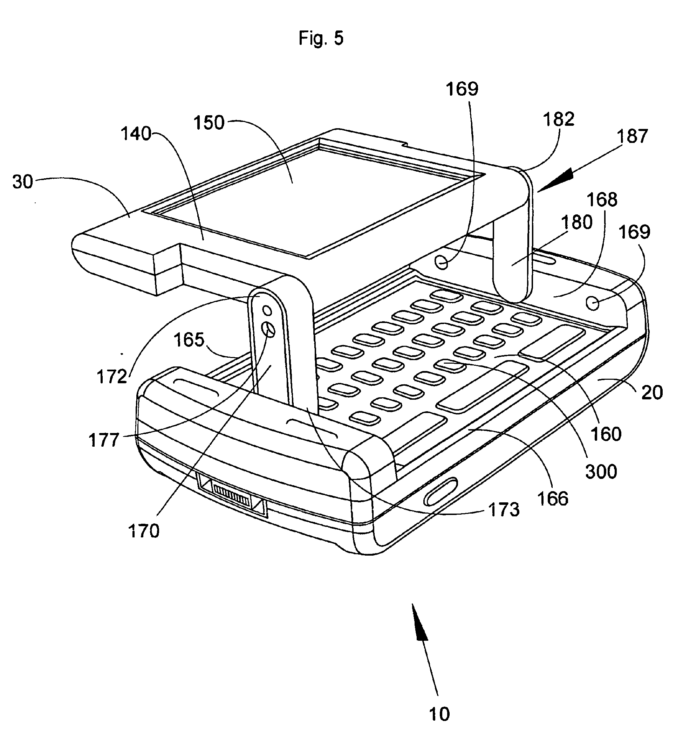

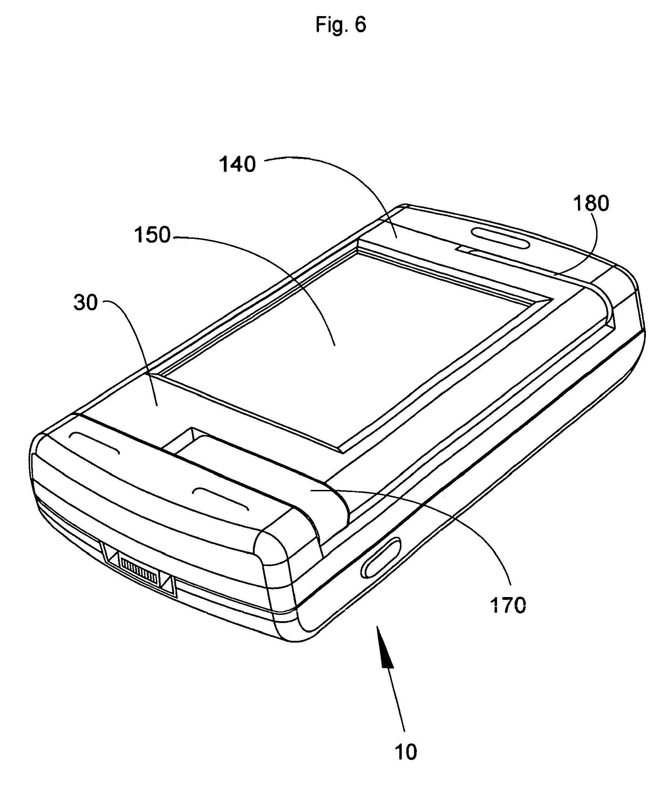

In Fig. 4 is shown that the interface unit 30 is connected to the casing 20 by the hinge mechanism 100 (see also Fig. 5 and 6). The interface unit 30 is rotatably arranged on the shaft 130 of the hinge mechanism 100, the shaft 130 extending through a through hole (not shown) arranged in an end 120 of the interface unit 30. When the interface unit 30 is rotated around the shaft 130 as shown in Fig. 4 a second side 140 of the interface unit 30 is available to a user.

On the second side 140 of the interface unit 30 a second display/touch screen 150 is arranged, which is substantially larger than the first display 70 in this embodiment and almost covers the entire second side 140 of the interface unit 30. The display 150 is preferably a touch sensitive screen or panel.

The interface unit 30 has a recess 161, 162 in each end of the short sides 163, 164 of the interface unit 30. The recesses 161, 162 having a length that substantially equals half the length of the sides 163, 164 and the length of the arms 170, 180 are provided in the half of the sides 163, 164 closest to the end 120. The depth of the recesses 161, 162 substantially equals the respectively thickness of the arms 170, 180. The thickness of the interface unit substantially equals the respectively width of the arms 170, 180.

As mentioned above the hinge mechanism 100 connects the interface unit 30 and the casing 20, and that the through shaft 130 of the hinge mechanism 100 is arranged in a through-hole of the interface unit 30. The arms 170, 180 connected to the shaft 130 in ends 172, 182 are arranged in the recesses 161, 162 on the interface unit 30. The other ends 173, 183 of the arms 170, 180 are attached to the holes on the casing 20 via the pins 190, 200. The holes on casing 20 are arranged in a recess 160 on the casing 20.

The recess 160 has a length that substantially equals the length of the interface unit 30, a width that equals the width of the mobile phone 10 and a depth that substantially equals the thickness of the interface unit 30. Thus, the entire interface unit 30 and the transformation arrangement 40 can be received within the boundary of the recess 160 (see Fig. 1 and 6). The surface of the recess 160 is framed by two sides 165, 166 of the mobile phone 10 providing the left and the right boundary of the recess 160 and by two walls 167, 168 perpendicular to sides 165. 166 and providing the upper and lower boundary of the recess 160.

In the recess 160 are arranged a sides hole on each of the walls 167, 168 that rotatably receives the pins 190, 200 of the arms 170, 180 so that the arms 170, 180 can be rotated in relation to the casing 20. The holes are arranged at substantially equal distance to the sides 165, 166 of the mobile phone 10.

Further are arranged on the walls 167, 168, close to the sides 165, 166 small projections 169 that corresponds to grooves or apertures 177,187 arranged in the ends 172, 182 of the arms 170, 180 for removably holding arms 170, 180 in desired positions.

Inside the arm 170 electrical cables or flex cables are arranged (not shown) to connect an interface unit 30 arranged on the shaft 130 and the electronics of the mobile phone arranged inside the casing 20. The cables can also be arranged through the arm 180. In the end 172 of the arm 170 is arranged electrical connecting means that electrically connects the interface unit 30 to the arm 170. In the other end 173 of the arm 170 electrical connecting means is arranged to connect the interface unit 30 to the casing 20, either with a cable through an aperture in the pin 190 to the casing 20 or by a connector on the pin 190 connecting to a corresponding connector arranged in the casing 20. Similar connecting arrangements can be provided in the arm 180 for electrically connecting interface unit 30 via the arm 180 to the casing 20. The connecting means of the arm or arms 170, 180 are further connecting to the processor 85 for transferring of data to and from the interface unit 30.

Furthermore, a holding functionality is arranged to hold the interface unit 30 in a desired angle relative to casing 20. The holding functionality could be a friction coupling, i.e. the interface unit 30 is jammed between the arms 170, 180 or a positive coupling, i.e. the connecting surfaces between the arms 170, 180 and the interface unit 30 are rimmed or in some other way arranged to have a positive engagement with each other.

As shown in Fig. 4 a keyboard 300 is arranged on the surface of the recess 160 with the keys arranged perpendicular to the longitudinal direction of the mobile phone 10. The keyboard 300 is uncovered when the interface unit 30 is rotated counter-clockwise in relation to the casing 20 around the shaft 130. The keyboard 300 is preferably a full qwerty-keyboard, arranged perpendicularly to the longitudinal direction of the mobile phone 10 so that a user set can write e-mails, documents, SMS etc. with ease. The orientation of the data displayed on the display 150 is preferably also orientated perpendicularly to the longitudinal direction of the mobile phone 10, but parallel to the arrangement of the keys of the keyboard. This setup is the writing setup of the mobile phone 10.

With reference to Fig. 5, it is shown an intermediate position of the interface unit 30, where the arms 170, 180 are rotated clockwise in relation to the casing 20 around the pins 190, 200 arranged in the casing and that the interface unit 30 is further rotated around the shaft 130 in relation to the arms 170, 180, so that the first side 35 and second side 140 of the interface unit 30 are parallel in relation to the casing 20. Fig. 5 also shows that the arms 170, 180 of the hinge mechanism 100 are connected to the casing 20 at a middle position in the recess 160 and that the length of the hinge arms 180 substantially equals half the width of the mobile phone 10 or the recess 160, so that the hinge arms 170, 180 will never extend outside the sides 165, 166 of the mobile phone 10. In the intermediate position the arms 170, 180 projects substantially perpendicular to the surface of the recess 160.

In Fig. 6 the arms 170, 180 are even further rotated around the pins 190, 200 so that they have been 180 degrees from their initial position and again are adjacent to the surface of the recess 160. The interface unit 30 is also further rotated in arms 170, 180 so that the interface unit 30 and the transformation arrangement 40 are arranged within the boundaries of the recess 160. The interface unit 30, the transformation arrangement 40 and the casing 20 form again a substantially flat front side together. The interface unit 30 has, however, been rotated 180 degrees around the shaft 130 compared with Fig. 1 and the second side 140 of the interface unit 30 is facing a user looking at the front side of the mobile phone 10. This is the PDA setup of the mobile phone 10.

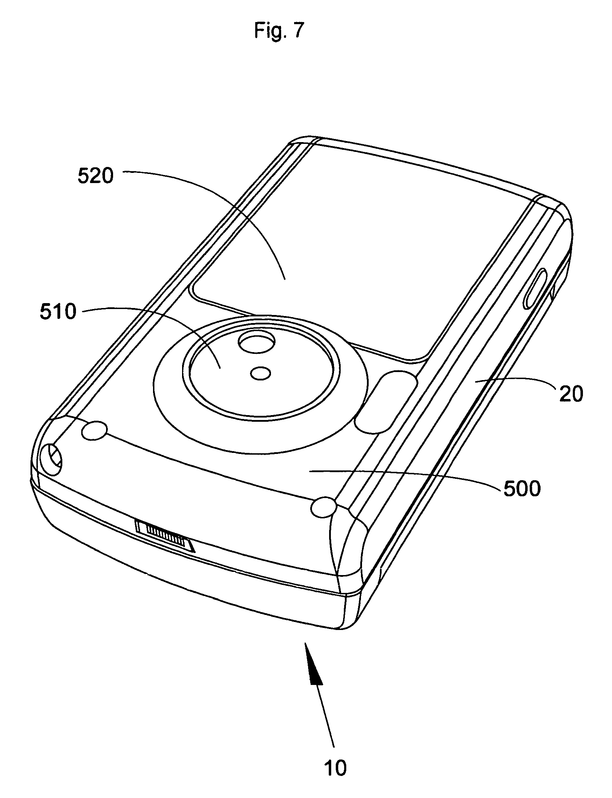

In Fig. 7 a rear side 500 of the mobile phone 10 is shown, where a built-in camera unit 510 is arranged. The camera unit 510 comprises a camera lens assembly, possibly a lens cover and software connected to the camera unit for controlling of the camera unit 510. The orientation of the camera unit 510 is controlled by the processor 85 and vary depending on the position of the interface unit 30, i.e. in the writing setup the orientation of the camera unit 510 is perpendicular to the orientation of the camera unit 510 in the phoning setup and the PDA setup. The area 520 can be an alternative input area in form of a touchpad.

The shaft 130 can either be carried in a bearing arranged in the interface unit 30 or just be received in the through-hole of the interface unit 30. Alternatively, the shaft 130 can be replaced by pins projecting from arms 170,180 into corresponding holes arranged in the end 120 on the interface unit 30. The projecting pins can include the electrical contacts, connecting the interface unit 30 to the casing 20 via the arms 170, 180 or be provided the holes for connecting cables.

The mobile phone 10 has three setups, where a first setup, the phoning setup, is shown in Fig. 1. In the phoning setup the interface unit 30 is arranged inside the recess 160 with the first display 70 and the keypad 50 facing the user.

A second setup, the writing setup, is shown in Fig. 4, where the interface unit 30 has been rotated about 90-180 degrees counter-clockwise around the shaft 130 from the first setup. The second display 150 and keyboard 300 face the user.

A third setup, the PDA setup, is shown in Fig. 6, where the interface unit 30 lifted from the surface of the recess 160 by the clockwise rotation of the arms 170, 180 around the pins 190, 200 arranged in the casing 20. An intermediate position is shown in Fig. 5, where also the interface unit 30 has been further rotated counter-clockwise around the shaft 130 so the interface unit is substantially parallel at a distance with the surface of the recess 160. To finally enter the third setup, the arms 170, 180 are further rotated clockwise until they again are adjacent to the surface of the recess 160 and the interface unit 30 is rotated counter-clockwise until first side 35 is adjacent facing the surface of the recess 160 and the display 150 is facing the user.

The processor 85 of the mobile phone 10 is provided with means for identifying the present setup/ relative position of the interface unit 30 in relation to casing 20, and is able to arrange or orientate the data displayed on the displays 70, 150 in respect of the position of the interface unit 30. The processor is also able to activate the different interfaces, i.e. keypad 50, keyboard 300, display 70, display 150 etc. in relation to the relative position of the interface unit 30.

The invention is not limited to the above-described examples or to the drawings showing examples of embodiments, but can be varied within the scope of the appended claims.

## Claims

1. A transformation arrangement (40) for connecting a interface unit (30) and a casing (20) in a communication device (10), wherein the transformation arrangement (40) is a hinge mechanism (100) including a holding part connected to two elongated parts, (130) said holding part rotatably connecting the interface unit and casing by said two elongated parts **characterized in that** the holding part (130) includes two elongated parts (170, 180) being rotatably attached in one end (172, 182) to the interface unit and in another end (174, 184) to the casing (20).

2. A transformation arrangement (40) according to claim 1, wherein the hinge mechanism (100) are arranged in a recess (160) of the casing (20), and connected in the end (174, 184) of the elongated parts (170, 180) to holes arranged on walls (167, 168) of the recess (160).

3. A transformation arrangement (40) according to claim 2, wherein the interface unit (30) is provided with a recess (161, 162) on two sides (163, 164) of the interface unit (30) and the elongated parts (170, 180) are connected to the interface unit (30) in one end (120) of the recess (161, 162).

4. A transformation arrangement (40) according to claim 2 or 3, wherein the recess (160) arranged in the casing (20) is further provided with holding devices (169) interacting with corresponding holding devices (177, 187) on the arms elongated parts (170, 180) to hold the elongated parts in different positions.

5. A transformation arrangement (40) according to any of claims 2-4, wherein the holding part is a shaft (130) arranged in a through hole of the interface unit (30) and the elongated parts are arms (170, 180) attached to the shaft (130) at each end of the shaft.

6. A communication device (10) with a rotatably arranged interface unit (30), where the interface unit (30) comprises two displays (70, 150) **characterized in that** the communication device (10) is provided with a transformation arrangement (40) according to any of the claims 1-5.

7. A communication device (10) according to claim 5, wherein the interface unit (30) and the transformation arrangement (40) are arranged in a recess (160) of the communication device (10).

8. A communication device (10) according to claim 5 or 6, wherein the interface unit (30) and the transformation arrangement (40) are arranged to enable rotation of the interface unit (30) between a first and a second end position, and where the interface unit (30) and transformation arrangement (40) in each end position are arranged within the recess (160).

9. A communication device (10) according to any of the preceding claims, wherein the interface unit (30) and the transformation arrangement (40) are arranged to have at least a third position, where the interface unit (30) are positioned between the first and the second end position with the second display (150) available for a user, where a keyboard (300) arranged on a surface of the recess (160) of the communication device (10) is uncovered by the rotation of the interface unit from a first end position.

10. A communication device (10) according to any of the claims 5-8, wherein the communication device is further provided with a processor (85) for identifying the present position of the interface unit (30) in relation to the casing (20) and for arranging and/or orientating data displayed on the displays (70, 150) in respect of the relative position of the interface unit (30).

## Patentansprüche

1. Umwandlungsanordnung (40) zum Verbinden einer Schnittstelleneinheit (30) und eines Gehäuses (20) in einer Kommunikationseinrichtung (10), wobei die Umwandlungsanordnung (40) ein Gelenkmechanismus (100) ist, der ein Halteteil (130), welches mit zwei langgestreckten Teilen verbunden ist, aufweist, wobei das Halteteil die Schnittstelleneinheit und das Gehäuse über die beiden langgestreckten Teile drehbar verbindet, **dadurch gekennzeichnet, dass** das Halteteil (130) zwei langgestreckte Teile (170, 180) aufweist, welche in einem Ende (172, 182) an der Schnittstelleneinheit und einem anderen Ende (174, 184) am Gehäuse (20) drehbar angebracht sind.

2. Umwandlungsanordnung (40) nach Anspruch 1, wobei der Gelenkmechanismus (100) in einer Ausnehmung (160) des Gehäuses (20) angeordnet ist und im Ende (174, 184) der langgestreckten Teile (170, 180) mit Löchern verbunden ist, welche auf Wänden (167, 168) der Ausnehmung (160) angeordnet sind.

3. Umwandlungsanordnung (40) nach Anspruch 2, wobei die Schnittstelleneinheit (30) mit einer Ausnehmung (161, 162) auf zwei Seiten (163, 164) der Schnittstelleneinheit (30) versehen ist und die langgestreckten Teile (170, 180) mit der Schnittstelleneinheit (30) in einem Ende (120) der Ausnehmung (161, 162) verbunden sind.

4. Umwandlungsanordnung (40) nach Anspruch 2 oder 3, wobei die Ausnehmung (160), welche im Gehäuse (20) angeordnet ist, außerdem mit Halteeinrichtungen (169) versehen ist, die funktionsmäßig mit entsprechenden Halteeinrichtungen (177, 187) auf den langgestreckten Armteilen (170, 180) zusammenwirken, um die langgestreckten Teile in unterschiedlichen Positionen zu halten.

5. Umwandlungsanordnung (40) nach einem der Ansprüche 2-4, wobei das Halteteil eine Welle (130) ist, welche in einem Durchgangsloch der Schnittstelleneinheit (30) angeordnet ist, und die langgestreckten Teile Arme (170, 180) sind, welche an der Welle (130) an jedem Ende der Welle angebracht sind.

6. Kommunikationseinrichtung (10) mit einer drehbar angeordneten Schnittstelleneinheit (30), wobei die Schnittstelleneinheit (30) zwei Anzeigeeinrichtungen (70, 150) aufweist, **dadurch gekennzeichnet, dass** die Kommunikationseinrichtung (10) mit einer Umwandlungsanordnung (40) nach einem der Ansprüche 1-5 versehen ist.

7. Kommunikationseinrichtung (10) nach Anspruch 5, wobei die Schnittstelleneinheit (30) und die Umwandlungsanordnung (40) in einer Ausnehmung (160) der Kommunikationseinrichtung (10) angeordnet sind.

8. Kommunikationseinrichtung (10) nach Anspruch 5 oder 6, wobei die Schnittstelleneinheit (30) und die Umwandlungsanordnung (40) angeordnet sind, eine Drehung der Schnittstelleneinheit (30) zwischen einer ersten und einer zweiten Endposition zu ermöglichen, und wobei die Schnittstelleneinheit (30) und die Umwandlungsanordnung (40) in jeder Endposition innerhalb der Ausnehmung (160) angeordnet sind.

9. Kommunikationseinrichtung (10) nach einem der vorhergehenden Ansprüche, wobei die Schnittstelleneinheit (30) und die Umwandlungsanordnung (40) angeordnet sind, um zumindest eine dritte Position einzunehmen, wo die Schnittstelleneinheit (30) zwischen der ersten und der zweiten Endposition positioniert ist, wobei die zweite Anzeigeeinrichtung (150) für einen Benutzer verfügbar ist, wo eine Tastatur (30), welche auf einer Fläche der Ausnehmung (160) der Kommunikationseinrichtung (10) angeordnet ist, durch die Drehung der Schnittstelleneinheit von einer ersten Endposition aufgedeckt wird.

10. Kommunikationseinrichtung (10) nach einem der Ansprüche 5-8, wobei die Kommunikationseinrichtung weiter mit einem Prozessor (85) versehen ist, um die aktuelle Position der Schnittstelleneinheit (30) in Bezug auf das Gehäuse (20) zu identifizieren und um Daten, welche auf den Anzeigeeinrichtungen (70, 150) angezeigt werden, in Bezug auf die Relativposition der Schnittstelleneinheit (30) anzuordnen und/oder zu orientieren.

## Revendications

1. Agencement de transformation (40) destiné à la connexion d'une unité d'interface (30) et d'un boîtier (20) dans un dispositif de communication (10), dans lequel l'agencement de transformation (40) est un mécanisme de charnière (100) comprenant une pièce de retenue (130) connectée à deux pièces allongées, ladite pièce de retenue connectant en rotation l'unité d'interface et le boîtier à l'aide des deux pièces allongées, **caractérisé en ce que** la pièce de retenue (130) comprend deux pièces allongées (170, 180) qui sont fixées de manière pivotante par une extrémité (172, 182) à l'unité d'interface et par l'autre extrémité (174, 184) au boîtier (20).

2. Agencement de transformation (40) selon la revendication 1, dans lequel le mécanisme de charnière (100) est disposé dans un décrochement (160) du boîtier (20) et est connecté par l'extrémité (174, 184) des pièces allongées (170, 180) à des trous ménagés dans des parois (167, 168) du décrochement (160).

3. Agencement de transformation (40) selon la revendication 2, dans lequel l'unité d'interface (30) est dotée d'un décrochement (161, 162) sur deux côtés (163, 164) de l'unité d'interface (30) et les pièces allongées (170, 180) sont connectées à l'unité d'interface (30) à une extrémité (120) du décrochement (161, 162).

4. Agencement de transformation (40) selon la revendication 2 ou 3, dans lequel le décrochement (160) ménagé dans le boîtier (20) est en outre doté de dispositifs de retenue (169) qui interagissent avec des dispositifs de retenue (177, 187) correspondants sur les pièces allongées (170, 180) en forme de bras, afin de maintenir les pièces allongées dans différentes positions.

5. Agencement de transformation (40) selon l'une quelconque des revendications 2 à 4, dans lequel la pièce de retenue est un arbre (130) placé dans un trou traversant de l'unité d'interface (30) et les pièces allongées sont des bras (170, 180) fixés sur l'arbre (130) à chacune de ses extrémités.

6. Dispositif de communication (10) avec une unité d'interface (30) montée pivotante, l'unité d'interface (30) comprenant deux écrans d'affichage (70, 150), **caractérisé en ce que** le dispositif de communication (10) est doté d'un agencement de transformation (40) selon l'une quelconque des revendications 1 à 5.

7. Dispositif de communication (10) selon la revendication 5, dans lequel l'unité d'interface (30) et l'agencement de transformation (40) sont disposés dans un décrochement (160) du dispositif de communication (10).

8. Dispositif de communication (10) selon la revendication 5 ou 6, dans lequel l'unité d'interface (30) et l'agencement de transformation (40) sont disposés de manière à permettre la rotation de l'unité d'interface (30) entre une première et une deuxième position d'extrémité et dans lequel l'unité d'interface (30) et l'agencement de transformation (40) sont disposés à l'intérieur du décrochement (160) dans chacune des positions d'extrémité.

9. Dispositif de communication (10) selon l'une quelconque des revendications précédentes, dans lequel l'unité d'interface (30) et l'agencement de transformation (40) sont disposés afin d'avoir au moins une troisième position, dans laquelle l'unité d'interface (30) est positionnée entre les première et deuxième positions d'extrémité, le deuxième écran d'affichage (150) étant accessible à l'utilisateur, et dans laquelle un clavier (300) disposé sur une surface du décrochement (160) du dispositif de communication (10) est découvert par la rotation de l'unité d'interface à partir d'une première position d'extrémité.

10. Dispositif de communication (10) selon l'une quelconque des revendications 5 à 8, dans lequel le dispositif de communication est en outre doté d'un processeur (85) destiné à identifier la position courante de l'unité d'interface (30) par rapport au boîtier (20) et à disposer et/ou orienter les données affichées sur les écrans d'affichage (70, 150) en fonction de la position relative de l'unité d'interface (30).
